# EUROPÄISCHE PATENTSCHRIFT

(11) **EP 0 469 295 B1**
(45) Veröffentlichungstag und Bekanntmachung des Hinweises auf die Patenterteilung: **07.12.1994**
(21) Anmeldenummer: 91110520.3
(22) Anmeldetag: 26.06.1991
(51) Int. Cl.: C04B 41/64, C04B 41/48, C08F 20/12, C08F 20/18, C08F 12/02

(54) **Mit Copolymerfilmen beschichteter Betonstein**
Copolymer film coated concrete block
Bloc en béton revêtu de films copolymères

(30) Priorität: 05.07.1990 DE 4021502
(43) Veröffentlichungstag der Anmeldung: 05.02.1992
(73) Patentinhaber: BASF Aktiengesellschaft, 67063 Ludwigshafen (DE)
(72) Erfinder: Dotzauer, Bernhard, Dr., W-6701 Maxdorf (DE); Wistuba, Eckehardt, Dr., W-6702 Bad Duerkheim (DE); Schwartz, Manfred, Dr., W-6700 Ludwigshafen (DE); Petri, Rolf, W-6710 Frankenthal (DE); Bechert, Bertold, W-6718 Gruenstadt (DE)

(56) Entgegenhaltungen:
- EP-A- 0 355 028
- DE-A- 3 918 981
- CHEMICAL ABSTRACTS, vol. 109, no. 10, September 1988, Columbus, Ohio, US;abstract no. 78744j, Seite 343; JP-A-63 055 176

## Beschreibung

Die Erfindung betrifft einen Betonstein, der auf wenigstens einer seiner Oberflächen mit einem gegebenenfalls mit Hilfsstoffen gefüllten Film eines Copolymeren aus
a) 65 bis 100 Gew.-% Acrylester von C₁- bis C₈-Alkanolen, Methacrylester von C₁- bis C₈-Alkanolen und/oder vinylaromatischer Monomerer und
b) 0 bis 35 Gew.-% weiterer copolymerisierbarer Monomerer
mit einer Glastemperatur von -25 bis +30°C überzogen ist, wobei der Film 0,5 bis 10 Gew.-%, bezogen auf das Copolymer, einer Verbindung der allgemeinen Formel I 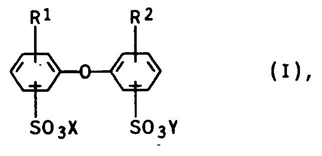
worin R¹ und R² Wasserstoff oder C₈- bis C₂₄-Alkyl bedeuten und nicht gleichzeitig Wasserstoff sind, und X und Y Alkalimetallionen oder Ammoniumionen sein können.

Betonsteine, insbesondere Betondachsteine stellt man aus Mörteln her, deren Konsistenz die endgültige Formgebung ermöglicht. Die Form der Dachsteine bleibt auch während des Härtungsprozesses, der meist bei Temperaturen zwischen 40 und 100°C erfolgt, erhalten. Betondachsteine neigen zu Kalkausblühungen; diese entstehen durch Reaktion von Calciumhydroxid auf der Oberfläche der Dachsteine mit dem Kohlendioxid aus der Luft. Calciumhydroxid kann während der Aushärtung, aber auch im Wetter auf die Oberfläche der Dachsteine gelangen. Die Folge sind fleckige, unansehnliche Dächer.

Als Beschichtungen dienen Polymerdispersionen (vgl. dazu DE-A 21 64 256). Die mit den bisherigen Copolymerbeschichtungen erzielten Ergebnisse lassen jedoch noch zu wünschen übrig. Die Steine schmutzen darüber hinaus stark an.

In DE-A-39 01 073 wird ein Betondachstein beschrieben, der mit einem Copolymerisat überzogen ist, der eine Organozinnverbindung einpolymerisiert enthält. In dieser Schrift wird der Emulgator I nicht genannt.

Aus der deutschen Patentanmeldung P 40 03 909.9 und der DE-A 38 27 975 sind Verfahren zur Verhinderung von Ausblüherscheinungen auf mineralischen Substraten bekannt, bei denen Copolymerisate mit einer Glasübergangstemperatur zwischen -25 und +30°C verwendet werden. Das Verfahren erfordert jedoch den Zusatz besonderer Stoffe, nämlich aromatischer Ketone und als zusätzlichen Verfahrensschritt die Bestrahlung der Beschichtung mit ultraviolettem Licht.

Aufgabe war es demnach, einen Betonstein zu finden, der in einfacher Weise beschichtet ist, praktisch nicht ausblüht und insbesondere bei höherer Temperatur nur wenig anschmutzt. Die Beschichtung soll darüber hinaus möglichst schnell ihre Wirkung entfalten.

Es wurde nun gefunden, daß der eingangs definierte Betonstein die obengenannten Forderungen erfüllt.

Weiterhin wurde ein Verfahren zur Herstellung eines solchen Betonsteins gefunden.

Bevorzugte Ausführungsformen der Erfindung sind den Unteransprüchen zu entnehmen.

Das Copolymere besteht aus a) 65 bis 100, bevorzugt 80 bis 100 und insbesondere 90 bis 99 Gew.-%, bezogen auf das Copolymere, Acrylester von C₁- bis C₈-Alkanolen, Methacrylester von C₁- bis C₈-Alkanolen und/oder vinylaromatischer Monomerer. Bevorzugt werden mindestens zwei Monomere eingesetzt. Die Alkanole des Acryl- und Methacrylesters können linear, verzweigt oder cyclisch sein. Es handelt sich im allgemeinen um Methanol, Ethanol, Propanol, n-, iso- und t-Butanol, n-Pentanol, n-Hexanol, Ethylhexanol, n-Octanol, Cyclohexanol und bevorzugt Methanol, n-Butanol und Ethylhexanol.

Vinylaromatische Monomere mit üblicherweise bis zu 20 C-Atomen sind im allgemeinen Styrole, die am Kern durch C₁-C₄-Alkylgruppen, Chlor oder Brom substituiert sind, wie α-Methylstyrol, para-Methylstyrol, para-Chlorstyrol oder para-Bromstyrol, und insbesondere Styrol selbst.

Andere Monomere b), die mit den obengenannten Monomeren copolymerisierbar sind, werden in Mengen bis 35, bevorzugt bis 20, insbesondere 1 bis 10 Gew.-%, bezogen auf das Copolymere, verwendet. Es kann sich beispielsweise handeln um: Acrylnitril, Methacrylnitril, α-Olefine wie Ethylen, Propen oder Isobuten, Diene wie Butadien und Isopren, Vinylchlorid, Vinylidenchlorid, Acrylsäure, Methacrylsäure, Itaconsäure, Maleinsäure, Fumarsäure, Amide dieser Säuren, Tetrahydrofurfurylacrylat und -methacrylat, Alkoxyalkylacrylate und -methacrylate mit 1 bis 4 C-Atomen im Alkoxy- und/oder im Alkylrest, wie 2- oder 3-Methoxy-n-butylacrylat und -methacrylat. Bevorzugt sind Acrylsäure, Methacrylsäure, deren Amide, Acrylnitril und Methacrylnitril. In manchen Fällen werden gute Ergebnisse mit Copolymeren erzielt, die keine Monomeren b enthalten.

Erfindungswesentlich ist es, daß das Copolymer eine Glastemperatur von -25 bis +30°C, insbesondere von -12 bis +22°C, aufweist.

Die Glastemperatur läßt sich nach üblichen Methoden, z.B. aus der Messung des E-Moduls im Kriechversuch als Funktion der Temperatur oder mit der Differentialthermoanalyse (DTA) bestimmen (s. dazu A. Zosel, Farbe und Lack 82 (1976), 125-134).

Typische Kombinationen von Monomeren a, deren Glastemperatur in dem erfindungsgemäß zu erreichenden Bereich liegen, sind z.B. (in Gew.-%):
- 65 % 2-Ethylhexylacrylat, 35 % Styrol,
- 55 % 2-Ethylhexylacrylat, 45 % Styrol
- 60 % 2-Ethylhexylacrylat, 20 % Methylmethacrylat,
   20 % Styrol,
- 55 % 2-Ethylhexylacrylat, 35 % n-Butylmethacrylat,
   10 % Styrol,
- 25 % n-Butylacrylat, 25 % 2-Ethylhexylacrylat, 50 % Styrol,
- 60 % n-Butylacrylat, 40 % Styrol,
   50 % n-Butylacrylat, 50 % Styrol
- 30 % n-Butylacrylat, 30 % 2-Ethylhexylacrylat,
   20 % Styrol, 20 % Methylmethacrylat,
- 35 % n-Butylacrylat, 30 % Methylmethacrylat,
   35 % n-Butylmethacrylat.

Durch einen zusätzlichen Einbau von Monomeren b werden die Glastemperaturen der Copolymere ebenfalls beeinflußt. Daher muß gegebenenfalls eine Anpassung der oben angegebenen Mengenverhältnisse der Monomeren a erfolgen.

Die Verbindung I wird bevorzugt in Mengen von 0,5 bis 4, insbesondere 0,5 bis 3 und speziell 1 bis 2 Gew.-%, bezogen auf das Copolymer, eingesetzt.

In der Formel I bedeuten R¹ und R² bevorzugt lineare oder verzweigte Alkylreste mit 6 bis 18 C-Atomen oder Wasserstoff, und insbesondere mit 6, 12 und 16 C-Atomen, wobei R¹ und R² nicht beide gleichzeitig Wasserstoff sind. X und Y sind bevorzugt Natrium, Kalium oder Ammoniumionen und insbesondere Natrium. Besonders bevorzugt sind X und Y Natrium, R¹ ein verzweigter Alkylrest mit 12 C-Atomen und R² Wasserstoff oder R¹. In der Technik werden häufig Gemische verwendet, die einen Anteil von 50 bis 90 Gew.-% des monoalkylierten Produktes aufweisen, beispielsweise Dowfax® 2A1 (Warenzeichen der Dow Chemical Company).

Diese Verbindungen sind als Emulgatoren allgemein bekannt, beispielsweise aus US-A 4 269 749 der Dow Chemical Company, und im Handel erhältlich.

Der Emulgator I wird vorzugsweise dem Copolymer bei dessen Herstellung zugesetzt. Er kann jedoch auch ganz oder teilweise dem Copolymer nach dessen Polymerisation zugesetzt werden. Das Copolymer kann in an sich üblicher Weise durch radikalische Copolymerisation der Monomeren a und b in wäßriger Emulsion hergestellt sein. Batch-Verfahren oder Zulaufverfahren, in denen der Initiator und/oder gegebenenfalls in Wasser emulgierte Monomere während der Polymerisation portionsweise oder kontinuierlich zugegeben wurden, können benutzt werden (s. beispielsweise Encyclopedia of Polymer Science and Engineering, Vol. 6 (1986) 1-52). Die entstehenden wäßrigen Polymerdispersionen haben meist eine Konzentration an Copolymer von 40 bis 60 Gew.-%. Als Emulgiermittel werden 0,5 bis 4, insbesondere 0,5 bis 3 und speziell 1 bis 2 Gew.-%, bezogen auf das Copolymer Verbindung I bevorzugt. Gegebenenfalls können zusätzlich übliche Emulgiermittel verwendet werden wie anionische und/oder nichtionische Emulgatoren, beispielsweise Natriumdialkylsulfosuccinate, Natriumsalze von sulfatierten Ölen, Natriumsalze von Alkylsulfonsäuren, Natrium-, Kalium- und Ammoniumalkylsulfate, Alkalisalze von Sulfonsäuren, oxalkylierte C₁₂-bis C₂₄-Fettalkohole und oxalkylierte Alkylphenole, sowie ferner oxethylierte Fettsäuren, Fettalkohole und/oder Fettamide, oxethylierte Alkylphenole, ferner Natriumsalze von Fettsäuren, wie Natriumstearat und Natriumoleat oder Fettalkoholsulfate und Fettalkoholethoxilate.

Die wäßrigen Dispersionen der Copolymere bilden bei Raumtemperatur glänzende, klare und zäh-flexible Filme, die nur wenig Wasser aufnehmen, nach 24-stündiger Wasserlagerung werden weniger als 10, meist weniger als 5 Gew.-% gemessen. Sie sind im allgemeinen frei von Weichmachern und von Filmbildemitteln.

In bekannter Weise arbeitet man zur Herstellung von Beschichtungsmassen in die wäßrigen Dispersionen der Copolymere anorganische Füllstoffe und Farbpigmente ein und stellt die gewünschte Viskosität mit Wasser ein. Als anorganische Füllstoffe kommen z.B. in Betracht: Kreide, Quarzmehl und/oder Schwerspat. Die Mengen an Pigmenten und/oder Füllstoffen liegt im allgemeinen zwischen 50 und 450 Gew.-Teilen, bezogen auf das Copolymer als 100 Gew.-Teile.

Als Betonsteine kommen z.B. geformte Gebilde aus Beton und Gasbeton, z.B. Platten, Rohre und insbesondere Dachziegel in Frage, wobei die Aufträge auch auf nichtausgehärtete Produkte dieser Art, insbesondere Betondachziegel, sogenannte grüne Ziegel, aufgebracht werden können. Der Betonstein wird in üblicher Weise aus fertiggemischtem Beton durch ein Strangpreßverfahren hergestellt. Er erhält dabei bereits seine endgültige Form. Der Auftrag der Beschichtungsmasse erfolgt in an sich üblicher Weise durch Spritzen, Spachteln, Rakeln oder Gießen, wobei meist Auftragsmengen von 50 bis 400, insbesondere 100 bis 250 g/m², gemessen in getrockenem Zustand, angewandt werden. Von besonderem Interesse ist das Aufbringen derartiger Beschichtungen auf nichtabgebundene, sogenannte "grüne" Betondachsteine. Das Trocknen des oder ggf. der Aufträge kann in an sich üblicher Weise, ggf. bei Raumtemperatur oder wenig erhöhter Temperatur durchgeführt werden. Dazu wird im allgemeinen der beschichtete Stein in eine sogenannte Kammer eingebracht. Dort wird er in einem 6 bis 12 Stunden dauernden Abbindeprozeß bei Temperaturen von 40 bis 65°C der Beton abgebunden und das Copolymerisat der Beschichtungsmasse verfilmt.

Nach diesem Prozeß wird der Stein vorzugsweise ein zweites Mal mit der Beschichtungsmasse besprüht. Die Trocknung erfolgt in einem Tunnelofen bei um 100°C liegenden Umlufttemperaturen. Tunnelofen und nachfolgende Abkühlstrecke sind so ausgelegt, daß eine vollständige Verfilmung stattfindet.

Die Steine sind damit gut geschützt gegen Kalkausblühungen. Weiterhin wird die Oberfläche der Beschichtungen auch bei erhöhten Temperaturen nicht klebrig, so daß die Steine kaum Schmutz annehmen.

Die in den folgenden Beispielen genannten Teile und Prozente beziehen sich, wenn nicht anders angegeben, auf das Gewicht.

### Vergleichsbeispiel 1V

Eine Emulsion aus 45 Gew.-Teilen Styrol (S), 55 Gew.-Teilen 2-Ethylhexylacrylat (EHA), 2,5- Gew.-Teilen Acrylsäure (AS), 105 Gew.-Teilen Wasser und 1,5 Gew.-Teilen des Natriumsalzes eines Schwefelsäurehalbesters eines iso-Nonylphenolethoxylates mit im Mittel 25 Ethylenoxid-Einheiten und 0,5 Gew.-Teilen eines iso-Nonylphenolethoxylates mit im Mittel 25 Ethylenoxid-Einheiten als Emulgatoren wurde mit Hilfe von 0,5 Gew.-Teilen Natriumperoxodisulfat im Emulsionszulaufverfahren bei 90°C polymerisiert.

### Beispiel 1

Es wurde wie im Vergleichsbeispiel 1V verfahren, jedoch mit dem Unterschied, daß als Emulgator nicht das Gemisch aus Vergleichsbeispiel 1V, sondern 1,5 Gew.-Teile eines technischen Gemisches aus ca. 80 Gew.-% einer Verbindung I, in der X und Y Natrium, R¹ ein verzweigter Alkylrest mit 12 C-Atomen und R² Wasserstoff sind, und ca. 20 Gew.-% einer Verbindung I, in der X und Y Natrium und R¹ und R² verzweigte Alkylreste mit 12 C-Atomen sind, verwendet wurde. Es entstand eine Copolymerdispersion mit einem Copolymergehalt von 49 Gew.-%, gemessen in üblicher Weise durch Abdampfen des Wassers.

Als Maß für die Anschmutzbarkeit wurde die Messung der Trennenergie eines Probenkörpers von einem 2 Wochen bei Raumtemperatur getrockneten Polymerfilm, gemessen nach A. Zosel, J. Adhesion (1989) 30 135-139 bei 70°C verwendet. Die Ergebnisse in Tabelle 1 zeigen klar die Überlegenheit des anspruchsgemäßen Emulgators. Alle Beispiele und Vergleichsversuche wurden in gleicher Weise geprüft.

### Vergleichsbeispiel 2V

Eine Emulsion aus 35 Gew.-Teilen n-Butylacrylat (BA), 35 Gew.-Teilen n-Butylmethacrylat (BMA), 30 Gew.-Teilen Methylmethacrylat (MMA), 2,5 Gew.-Teilen Acrylsäure, 105 Gew.-Teilen Wasser und 1,5 Gew.-Teilen des Natriumsalzes eines Schwefelsäurehalbesters eines iso-Nonylphenolethoxylates mit im Mittel 25 Ethylenoxid-Einheiten und 0,5 Gew.-Teilen eines iso-Nonylphenolethoxylates mit im Mittel 25 Ethylenoxid-Einheiten als Emulgatoren wurde mit Hilfe von 0,5 Gew.-Teilen Natriumperoxodisulfat im Emulsionszulaufverfahren bei 90°C polymerisiert.

### Beispiel 2

Es wurde wie im Vergleichsbeispiel 2V verfahren, jedoch mit dem Unterschied, daß als Emulgator nicht das Gemisch aus Vergleichsbeispiel 2V, sondern 1,5 Gew.-Teile eines technischen Gemisches aus ca. 80 Gew.-% einer Verbindung I, in der X und Y Natrium, R¹ ein verzweigter Alkylrest mit 12 C-Atomen und R² Wasserstoff sind, und ca. 20 Gew.-% einer Verbindung I, in der X und Y Natrium und R¹ und R² verzweigte Alkylreste mit 12 C-Atomen sind, verwendet wurde.

### Vergleichsbeispiel 3V

Eine Emulsion aus 20 Gew.-Teilen Methylmethacrylat, 60 Gew.-Teilen 2-Ethylhexylacrylat, 20 Gew.-Teilen Styrol, 2,5 Gew.-Teilen Acrylsäure, 105 Gew.-Teilen Wasser und 1,5 Gew.-Teilen des Natriumsalzes eines Schwefelsäurehalbesters eines iso-Nonylphenolethoxylates mit im Mittel 25 Ethylenoxid-Einheiten und 0,5 Gew.-Teilen eines iso-Nonylphenolethoxylates mit im Mittel 25 Ethylenoxid-Einheiten als Emulgatoren wurde mit Hilfe von 0,5 Gew.-Teilen Natriumperoxodisulfat im Emulsionszulaufverfahren bei 90°C polymerisiert.

### Beispiel 3

Es wurde wie im Vergleichsbeispiel 3V verfahren, jedoch mit dem Unterschied, daß als Emulgator nicht das Gemisch aus Vergleichsbeispiel 3V, sondern 1,5 Gew.-Teile eines technischen Gemisches aus ca. 80 Gew.-% einer Verbindung I, in der X und Y Natrium, R¹ ein verzweigter Alkylrest mit 12 C-Atomen und R² Wasserstoff sind, und ca. 20 Gew.-% einer Verbindung I, in der X und Y Natrium und R¹ und R² verzweigte Alkylreste mit 12 C-Atomen sind, verwendet wurde.

### Vergleichsbeispiel 4V

Eine Emulsion aus 35 Gew.-Teilen n-Butylmethacrylat, 10 Gew.-Teilen Styrol und 55 Gew.-Teilen 2-Ethylhexylacrylat, 2,5 Gew.-Teilen Acrylsäure, 105 Gew.-Teilen Wasser und 1,5 Gew.-Teilen des Natriumsalzes eines Schwefelsäurehalbesters eines iso-Nonylphenolethoxylates mit im Mittel 25 Ethylenoxid-Einheiten und 0,5 Gew.-Teilen eines iso-Nonylphenolethoxylates mit im Mittel 25 Ethylenoxid-Einheiten als Emulgatoren wurde mit Hilfe von 0,5 Gew.-Teilen Natriumperoxodisulfat im Emulsionszulaufverfahren bei 90°C polymerisiert.

### Beispiel 4

Es wurde wie im Vergleichsbeispiel 4V verfahren, jedoch mit dem Unterschied, daß als Emulgator nicht das Gemisch aus Vergleichsbeispiel 4V, sondern 1,5 Gew.-Teile eines technischen Gemisches aus ca. 80 Gew.-% einer Verbindung I, in der X und Y Natrium, R¹ ein verzweigter Alkylrest mit 12 C-Atomen und R² Wasserstoff sind, und ca. 20 Gew.-% einer Verbindung I, in der X und Y Natrium und R¹ und R² verzweigte Alkylreste mit 12 C-Atomen sind, verwendet wurde.

**Tabelle 1**

| | Monomere [Gew.-Tl] | Trennenergie in J/m² bei 70°C |
|---|---|---|
| 1V | 45 S 55 EHA 2.5 AS | 4,6 |
| 1 | 45 S 55 EHA 2.5 AS | 2,0 |
| 2V | 35 BA 35 BMA 30MMA 2.5 AS | 4,5 |
| 2 | 35 BA 35 BMA 30MMA 2.5 AS | 1,0 |
| 3V | 60 EHA 20MMA 20 S 2.5 AS | 8,3 |
| 3 | 60 EHA 20MMA 20 S 2.5 AS | 1,5 |
| 4V | 55 EHA 35BMA 10 S 2.5 AS | 4,0 |
| 4 | 55 EHA 35BMA 10 S 2.5 AS | 3,7 |

## Patentansprüche (Patentansprüche für folgende(n) Vertragsstaat(en): BE, CH, DE, DK, FR, GB, IT, LI, NL, SE)

1. Betonstein, der auf wenigstens einer seiner Oberflächen mit einem gegebenenfalls mit Hilfsstoffen gefüllten Film eines Copolymeren aus
a) 65 bis 100 Gew.-% Acrylester von C₁- bis C₈-Alkanolen, Methacrylester von C₁- bis C₈-Alkanolen und/oder vinylaromatischer Monomerer und
b) 0 bis 35 Gew.-% weiterer copolymerisierbarer Monomerer
mit einer Glastemperatur von -25 bis +30°C überzogen ist, wobei der Film 0,5 bis 10 Gew.-%, bezogen auf das Copolymer, einer Verbindung der allgemeinen Formel I 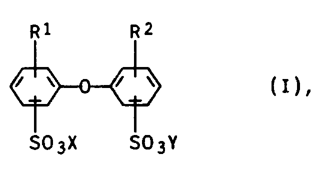 worin R¹ und R² Wasserstoff oder C₄- bis C₂₄-Alkyl bedeuten und nicht gleichzeitig Wasserstoff sind, und X und Y Alkalimetallionen oder Ammoniumionen sein können, enthält.

2. Betonstein nach Anspruch 1, dadurch gekennzeichnet, daß R¹ und R² lineare oder verzweigte Alkylreste mit 6 bis 18 C-Atomen oder Wasserstoff, wobei R¹ und R² nicht beide gleichzeitig Wasserstoff sind, und X und Y Natrium, Kalium oder Ammoniumionen bedeuten.

3. Betonstein nach Anspruch 1 oder 2, dadurch gekennzeichnet, daß der Film 0,5 bis 4 Gew.-%, bezogen auf das Copolymer, der Verbindung I enthält.

4. Betonstein nach den Ansprüchen 1 bis 3, dadurch gekennzeichnet, daß man das Copolymer durch Emulsionspolymerisation unter Verwendung der Verbindung I herstellt.

5. Verfahren zur Herstellung eines Betonsteins gemäß der Ansprüche 1 bis 4 durch Aufbringen auf wenigstens eine Oberfläche eines grünen Betonsteins einer wäßrigen Zubereitung, die eine wäßrige Dispersion eines Copolymeren aus
a) 65 bis 100 Gew.-% Acrylester von C₁- bis C₈-Alkanolen, Methacrylester von C₁- bis C₈-Alkanolen und/oder vinylaromatischer Monomerer und
b) 0 bis 35 Gew.-% weiterer copolymerisierbarer Monomerer
mit einer Glastemperatur von -25 bis +30°C enthält, dadurch gekennzeichnet, daß die wäßrige Zubereitung 0,5 bis 10 Gew.-%, bezogen auf das Copolymer, einer Verbindung der allgemeinen Formel I 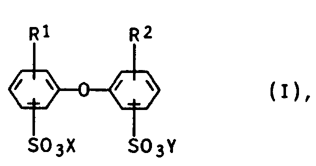 enthält, worin R¹ und R² Wasserstoff oder C₄- bis C₂₄-Alkyl bedeuten und nicht gleichzeitig Wasserstoff sind, und X und Y Alkalimetallionen oder Ammoniumionen sein können.

6. Verfahren nach Anspruch 5, dadurch gekennzeichnet, daß man die Zubereitung in solcher Menge auf den Betonstein aufbringt, daß der trockene Gesamtauftrag 50 bis 400 g/m² beträgt.

## Patentansprüche (Patentansprüche für folgende(n) Vertragsstaat(en): ES)

1. Verfahren zur Herstellung eines beschichteten Betonsteins, dadurch gekennzeichnet, daß man ihn auf wenigstens einer seiner Oberflächen mit einem gegebenenfalls mit Hilfsstoffen gefüllten Film eines Copolymeren aus
a) 65 bis 100 Gew.-% Acrylester von C₁- bis C₈-Alkanolen, Methacrylester von C₁- bis C₈-Alkanolen und/oder vinylaromatischer Monomerer und
b) 0 bis 35 Gew.-% weiterer copolymerisierbarer Monomerer
mit einer Glastemperatur von -25 bis +30°C überzieht, wobei der Film 0,5 bis 10 Gew.-%, bezogen auf das Copolymer, einer Verbindung der allgemeinen Formel I 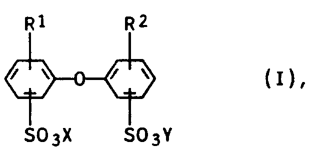 worin R¹ und R² Wasserstoff oder C₄- bis C₂₄-Alkyl bedeuten und nicht gleichzeitig Wasserstoff sind, und X und Y Alkalimetallionen oder Ammoniumionen sein können, enthält.

2. Verfahren nach Anspruch 1, dadurch gekennzeichnet, daß R¹ und R² lineare oder verzweigte Alkylreste mit 6 bis 18 C-Atomen oder Wasserstoff, wobei R¹ und R² nicht beide gleichzeitig Wasserstoff sind, und X und Y Natrium, Kalium oder Ammoniumionen bedeuten.

3. Verfahren nach Anspruch 1 oder 2, dadurch gekennzeichnet, daß der Film 0,5 bis 4 Gew.-%, bezogen auf das Copolymer, der Verbindung I enthält.

4. Verfahren nach den Ansprüchen 1 bis 3, dadurch gekennzeichnet, daß man das Copolymer durch Emulsionspolymerisation unter Verwendung der Verbindung I herstellt.

5. Verfahren zur Herstellung eines beschichteten Betonsteins durch Aufbringen auf wenigstens eine Oberfläche eines grünen Betonsteins einer wäßrigen Zubereitung, die eine wäßrige Dispersion eines Copolymeren aus
a) 65 bis 100 Gew.-% Acrylester von C₁- bis C₈-Alkanolen, Methacrylester von C₁- bis C₈-Alkanolen und/oder vinylaromatischer Monomerer und
b) 0 bis 35 Gew.-% weiterer copolymerisierbarer Monomerer
mit einer Glastemperatur von -25 bis +30°C enthält, dadurch gekennzeichnet, daß die wäßrige Zubereitung 0,5 bis 10 Gew.-%, bezogen auf das Copolymer, einer Verbindung der allgemeinen Formel I 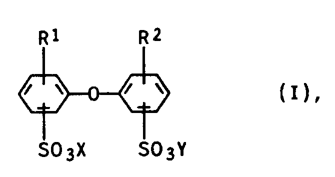 enthält, worin R¹ und R² Wasserstoff oder C₄- bis C₂₄-Alkyl bedeuten und nicht gleichzeitig Wasserstoff sind, und X und Y Alkalimetallionen oder Ammoniumionen sein können.

6. Verfahren nach Anspruch 5, dadurch gekennzeichnet, daß man die Zubereitung in solcher Menge auf den Betonstein aufbringt, daß der trockene Gesamtauftrag 50 bis 400 g/m² beträgt.

## Claims (Claims for the following Contracting State(s): BE, CH, DE, DK, FR, GB, IT, LI, NL, SE)

1. Precast concrete which is coated on at least one of its surfaces with a film, with or without fillers, of a copolymer of
a) from 65 to 100% by weight of acrylic esters of C₁-C₈-alkanols, methacrylic esters of C₁-C₈-alkanols and/or vinylaromatic monomers and
b) from 0 to 35% by weight of other copolymerizable monomers
with a glass transition temperature of from -25 to +30°C, where the film contains from 0.5 to 10% by weight, based on the copolymer, of a compound of the formula I 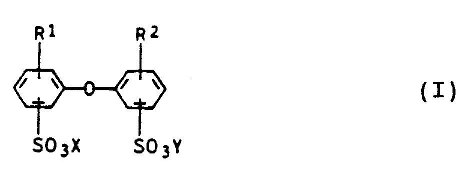 where R¹ and R² are each hydrogen or C₄-C₂₄-alkyl but not more than one is hydrogen, and X and Y can be alkali metal ions or ammonium ions.

2. Precast concrete as claimed in claim 1, wherein R¹ and R² are linear or branched alkyls of from 6 to 18 carbon atoms or hydrogen, with R¹ and R² not both being hydrogen, and X and Y are sodium, potassium or ammonium ions.

3. Precast concrete as claimed in claim 1 or 2, wherein the film contains from 0.5 to 4% by weight, based on the copolymer, of the compound I.

4. Precast concrete as claimed in claim 1 or 2 or 3, wherein the copolymer is prepared by emulsion polymerization using compound I.

5. A process for producing precast concrete as claimed in claim 1 or 2 or 3 or 4 by applying to at least one surface of green precast concrete an aqueous composition which contains an aqueous dispersion of a copolymer of
a) from 65 to 100% by weight of acrylic esters of C₁-C₈-alkanols, methacrylic esters of C₁-C₈-alkanols and/or vinylaromatic monomers and
b) from 0 to 35% by weight of other copolymerizable monomers
with a glass transition temperature of from -25 to +30°C, wherein the aqueous composition contains from 0.5 to 10% by weight, based on the copolymer, of a compound of the formula I 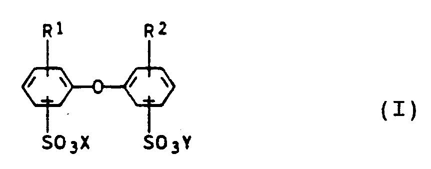 where R¹ and R² are each hydrogen or C₄-C₂₄-alkyl but not more than one is hydrogen, and X and Y can be alkali metal ions or ammonium ions.

6. A process as claimed in claim 5, wherein the composition is applied to the precast concrete in an amount such that the total amount applied is from 50 to 400 g/m² when dry.

## Claims (Claims for the following Contracting State(s): ES)

1. A process for producing coated precast concrete, which comprises coating it on at least one of its surfaces with a film, with or without fillers, of a copolymer of
a) from 65 to 100% by weight of acrylic esters C₁-C₈-alkanols, methacrylic esters of C₁-C₈-alkanols and/or vinylaromatic monomers and
b) from 0 to 35% by weight of other copolymerizable monomers
with a glass transition temperature of from -25 to +30°C, where the film contains from 0.5 to 10% by weight, based on the copolymer, of a compound of the formula I 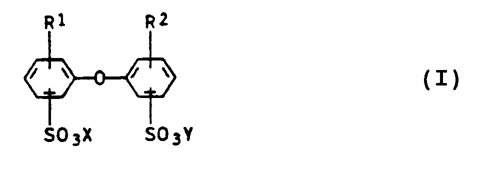 where R¹ and R² are each hydrogen or C₄-C₂₄-alkyl but not more than one is hydrogen, and X and Y can be alkali metal ions or ammonium ions.

2. A process as claimed in claim 1, wherein R¹ and R² are linear or branched alkyls of from 6 to 18 carbon atoms or hydrogen, with R¹ and R² not both being hydrogen, and X and Y are sodium, potassium or ammonium ions.

3. A process as claimed in claim 1 or 2, wherein the film contains from 0.5 to 4% by weight, based on the copolymer, of the compound I.

4. A process as claimed in claim 1 or 2 or 3, wherein the copolymer is prepared by emulsion polymerization using compound I.

5. A process for producing control precast concrete by applying to at least one surface of green precast concrete an aqueous composition which contains an aqueous dispersion of a copolymer of
a) from 65 to 100% by weight of acrylic esters of C₁-C₈-alkanols, methacrylic esters of C₁-C₈-alkanols and/or vinylaromatic monomers and
b) from 0 to 35% by weight of other copolymerizable monomers
with a glass transition temperature of from -25 to +30°C, wherein the aqueous composition contains from 0.5 to 10% by weight, based on the copolymer, of a compound of the formula I 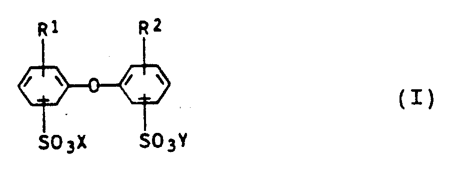 where R¹ and R² are each hydrogen or C₄-C₂₄-alkyl but not more than one is hydrogen, and X and Y are each alkali metal ions or ammonium ions.

6. A process as claimed in claim 5, wherein the composition is applied to the precast concrete in an amount such that the total amount applied is from 50 to 400 g/m² when dry.

## Revendications (Revendications pour l'(les) Etat(s) contractant(s) suivant(s): BE, CH, DE, DK, FR, GB, IT, LI, NL, SE)

1. Brique ou pierre de béton revêtue, sur au moins l'une de ses surfaces, d'un film, éventuellement chargé d'adjuvants, d'un copolymère de
a) 65 à 100% en poids d'esters acryliques d'alcanols en C₁ à C₈, d'esters méthacryliques d'alcanols en C₁ à C₈ et/ou de monomères vinylaromatiques et
b) 0 à 35% en poids d'autres monomères copolymérisables,
d'une température de transition vitreuse de -25 à +30°C, où le film contient de 0,5 à 10% en poids, par rapport au copolymère, d'un composé de la formule générale I 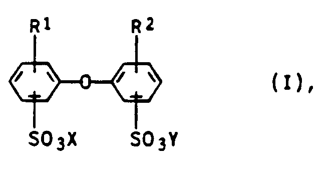 dans laquelle R¹ et R² représentent des atomes d'hydrogène ou des radicaux alkyle en C₄ à C₂₄ et ne représentent pas simultanément des atomes d'hydrogène et X et Y peuvent être des ions de métaux alcalins ou d'ammonium.

2. Brique ou pierre de béton suivant la revendication 1, caractérisée en ce que R¹ et R² représentent des radicaux alkyle linéaires ou ramifiés, qui comportent de 6 à 18 atomes de carbone, ou des atomes d'hydrogène, où R¹ et R² ne représentent pas simultanément des atomes d'hydrogène et X et Y représentent des ions sodium, potassium ou ammonium.

3. Brique ou pierre suivant la revendication 1 ou 2, caractérisée en ce que le film contient de 0,5 à 4% en poids, par rapport au copolymère, du composé I.

4. Brique ou pierre de béton suivant l'une quelconque des revendications 1 à 3, caractérisée en ce que l'on prépare le copolymère par polymérisation en émulsion en recourant à l'emploi du composé I.

5. Procédé de fabrication d'une brique ou pierre de béton suivant l'une quelconque des revendications 1 à 4, par l'application sur au moins une surface d'une brique ou pierre de béton verte ou à l'état vert, d'une préparation aqueuse, qui contient une dispersion aqueuse d'un polymère de
a) 65 à 100% en poids d'esters acryliques d'alcanols en C₁ à C₈, d'esters méthacryliques d'alcanols en C₁ à C₈ et/ou de monomères vinylaromatiques et
b) 0 à 35% en poids d'autres monomères copolymérisables,
d'une température de transition vitreuse de -25 à +30°C, caractérisé en ce que la préparation aqueuse contient de 0,5 à 10% en poids, par rapport au copolymère, d'un composé de la formule générale I 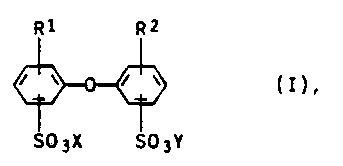 dans laquelle R¹ et R² représentent des atomes d'hydrogène ou des radicaux alkyle en C₄ à C₂₄ et ne représentent pas simultanément des atomes d'hydrogène et X et Y peuvent être des ions de métaux alcalins ou d'ammonium.

6. Procédé suivant la revendication 5, caractérisé en ce que l'on applique la préparation sur la pierre ou brique de béton en une proportion telle que le poids total appliqué soit, à sec, de 50 à 400 g/m².

## Revendications (Revendications pour l'(les) Etat(s) contractant(s) suivant(s): ES)

1. Procédé de préparation d'une brique ou pierre de béton revêtue, caractérisé en ce qu'on la revêt, sur au moins l'une de ses surfaces, d'un film, éventuellement chargé d'adjuvants, d'un copolymère de
a) 65 à 100% en poids d'esters acryliques d'alcanols en C₁ à C₈, d'esters méthacryliques d'alcanols en C₁ à C₈ et/ou de monomères vinylaromatiques et
b) 0 à 35% en poids d'autres monomères copolymérisables,
d'une température de transition vitreuse de -25 à +30°C, où le film contient de 0,5 à 10% en poids, par rapport au copolymère, d'un composé de la formule générale I 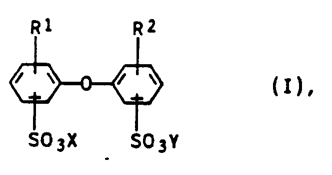 dans laquelle R¹ et R² représentent des atomes d'hydrogène ou des radicaux alkyle en C₄ à C₂₄ et ne représentent pas simultanément des atomes d'hydrogène et X et Y peuvent être des ions de métaux alcalins ou d'ammonium.

2. Procédé suivant la revendication 1, caractérisé en ce que R¹ et R² représentent des radicaux allcyle linéaires ou ramifiés, qui comportent de 6 à 18 atomes de carbone, ou des atomes d'hydrogène, où R¹ et R² ne représentent pas simultanément des atomes d'hydrogène et X et Y représentent des ions sodium, potassium ou ammonium.

3. Procédé suivant la revendication 1 ou 2, caractérisé en ce que le film contient de 0,5 à 4% en poids, par rapport au copolymère, du composé I.

4. Procédé suivant l'une quelconque des revendications 1 à 3, caractérisé en ce que l'on prépare le copolymère par polymérisation en émulsion en recourant à l'emploi du composé I.

5. Procédé de fabrication d'une brique ou pierre de béton par l'application sur au moins une surface d'une brique ou pierre de béton verte ou à l'état vert, d'une préparation aqueuse, qui contient une dispersion aqueuse d'un polymère de
a) 65 à 100% en poids d'esters acryliques d'alcanols en C₁ à C₈, d'esters méthacryliques d'alcanols en C₁ à C₈ et/ou de monomères vinylaromatiques et
b) 0 à 35% en poids d'autres monomères copolymérisables,
d'une température de transition vitreuse de -25 à +30°C, caractérisé en ce que la préparation aqueuse contient de 0,5 à 10% en poids, par rapport au copolymère, d'un composé de la formule générale I 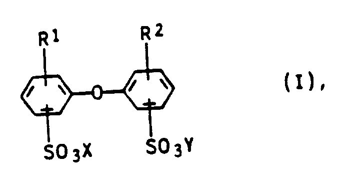 dans laquelle R¹ et R² représentent des atomes d'hydrogène ou des radicaux alkyle en C₄ à C₂₄ et ne représentent pas simultanément des atomes d'hydrogène et X et Y peuvent être des ions de métaux alcalins ou d'ammonium.

6. Procédé suivant la revendication 5, caractérisé en ce que l'on applique la préparation sur la pierre ou brique de béton en une proportion telle que le poids total appliqué soit, à sec, de 50 à 400 g/m².
